# EUROPEAN PATENT APPLICATION

(11) **EP 2 193 845 A1**
(43) Date of publication of application: **09.06.2010**
(21) Application number: 09014268.8
(22) Date of filing: 16.11.2009
(51) Int. Cl.: B01L 3/00, B01L 3/14, B29C 45/00

(54) **Capillary reaction vessel**

(30) Priority: 18.11.2008 EP 08020060
(71) Applicant: Roche Diagnostics GmbH, 68305 Mannheim (DE); F.HOFFMANN-LA ROCHE AG, 4070 Basel (CH)
(72) Inventor: Rainer, Alois, 80939 München (DE); Stutz, Andre, 5620 Bremgarten (CH)

(57) **Abstract**

The present invention provides plastic capillaries having an optimized volume-to-surface ratio that are suitable for rtPCR applications. Moreover, the present invention provides a new method for the production of said rtPCR plastic capillaries. In more detail, the present invention provides plastic capillaries that are produced by a 2-step molding process.

## Description

### Background of the Invention

The person skilled in the art knows that for the optimization of vessels towards real time polymerase chain reaction (rtPCR) several aspects need to be considered. For the PCR as such it is of importance that a fast and homogeneous heat transfer through the vessel walls need to be provided. This heat transfer parameter is proportional to the wall thickness and the surface-to-volume ration of the vessel. Consequently, thin capillaries are preferred as PCR vessels. A drawback of this consequence is that with increasing PCR volume longer capillaries are needed and such long capillaries present high demands on the material and the production process of such vessels.

From the state of the art plastic as well as glass capillaries for rtPCR applications are known. The person skilled in the art will appreciate that capillaries for rtPCR applications should have a high surface-to-volume ration and thin walls in order to provide good thermal transfer properties, such that fast and accurate thermal cycling is possible. Towards higher surface-to-volume ration glass capillaries are preferred, since the limitations of injection molding of plastic devices with respect to wall thickness and length of a vessel are below the limitations of glass vessels. A drawback of glass capillaries are high material and production costs compared to injection molding using plastic.

Comercially available glass capillaries have e.g. a reaction volume of 20 µl based on a reaction section of about 17 mm in length, an outer diameter of 1.55 mm and a wall thickness 0.175 mm (Roche Diagnostics GmbH, Cat. Nr. 04929292001). Moreover, glass capillaries having a reaction volume of 100 µl are available, too (Roche Diagnostics GmbH, Cat. Nr. 03337090001).

If such capillary dimensions are intended to be produced using injection molding techniques, one faces several fundamental problems.

In state of the art molding techniques (designated as 1-step molding throughout the present application) a molten plastic mass is injected under high pressure into a cavity formed between a core and a mold to obtain a cavity closed at one end (WO 2004/054715). If longer capillaries having thin walls and small diameters are intended, at least the following fundamental hinderances need to be met:
- Due to the high pressure of the molten mass and small inaccuracies of the mold, large shear forces occur at the thin core of the mold resulting in deflection of said core and an inhomogeneous filling of the mold cavity (wall displacement). This inhomogeneous filling of the mold results in an one-sided increase of the core force (self-energizing effect due to the advancing flow of the molten mass).
- For transparent materials (such as COC or PC) necessary for rtPCR, the degassing is of importance to avoid embedding of air boubles and said degassing becomes problematic with increasing length of the capillaries.

The consequences of this fundamental hinderances are at least that:
- The inhomogeneous filling of the mold cavity results in an inhomogeneous wall thickness distribution of the capillaries and this provides an inhomogeneous heat expansion during the temperature cycles of the PCR. For rtPCR this deformation of the vessels will affect the optical reading of the vessel fluorescence and such vessels are no longer suitable.
- Frozen tension within the molded capillary will relax due during the elevated temperatures of PCR cycling, causing deflection and consequently, affecting the optical reading
- The heat input through the walls having a wall thickness distribution will be inhomogeneous affecting the reaction kinetics of mixtures.
- Embedded air bouble will affect the detection of optical information for rtPCR applications.

To summarize, as a consequence of the insufficient stability of the core, the 1-step molding production of thin-walled devices closed at one end having sufficient quality for rtPCR applications is restricted with respect to length and diameter.

The WO 2004/054715 describes 1-step molded plastic capillaries with a wall thickness of as thin as 0.01 mm, a inner diameter of as small as 0.02 mm and a length of as long as 50 mm, but no experimental data is provided that said minimum values are produceable nor that any of the described plastic capillaries are suitable for rtPCR applications.

Commercially available are plastic capillaries having the following dimensions:
- Roche Diagnostics offers plastic capillaries having a reaction volume of 20 µl (Id.nr. 04924738001). Said capillaries have a wall thickness of 0.3 mm, an inner diameter of 1.7 mm and a length of the reaction section of around 8 mm for 20 µl reaction volume.
- From Osmetech Molecular Diagnostics plastic capillaries are available having a reaction volume of 20 µl, too (SensiTube™). Said capillaries have a wall thickness of 0.3 mm, an inner diameter of 1.5 mm and a length of the reaction section of around 11 mm for 20 µl reaction volume.
- Other plastic capillaries are available from Eurogentech, Eliod and Genaxxon.

Based on the drawbacks of the state of the art, the aim of the present invention is to provide a new molding technique to produce high quality capillaries for sensitive rtPCR applications, said molding technique enables the production of thiner and longer plastic capillaries that are suitable for rtPCR applications.

### Summary of the Invention

The present invention provides plastic capillaries having an optimized volume-to-surface ratio that are suitable for rtPCR applications. Moreover, the present invention provides a new method for the production of said rtPCR plastic capillaries.

One aspect of the present invention is a reaction container for real-time nucleic acid amplifications made of plastic material comprising
a) a capillary section closed at one end,
b) a tubular section open at both ends, and
c) a linkage between said capillary section and said tubular section,
wherein said linkage is a fused joint designed to permanently link the open end of said capillary section to one of said open ends of said tubular section thus forming a reaction container having one opening, said fused joint is producing light scatter upon illumination.Another aspect of the present invention is an injection molding method to produce a reaction container according to the present invention, said method comprises
a) providing a first mold with a core,
b) performing a first injection step to produce the tubular section of said reaction container, said tubular section is partially surrounding said core,
c) placing said core partially surrounded by said tubular section in a second mold, and
d) performing a second injection step to produce the capillary section of said reaction container,
wherein said capillary section becomes permanently linked to said tubular section during said second injection step to form said reaction container having one opening.

During the first step of the production process according to the present invention the core is initially stabilized by a guidance on both sides of the core while being partially coated with molten plastic. Based on said guidance on both sides of the core, the core resists the pressure of the molten mass during the first injection step and stays concentric within the surrounding cavity. The core partially surrounded by plastic is then placed into a second cavity such that the tip of the core, sticking in the guidance during the first injection step, becomes surrounded by molten plastic during a second injection step.

Based on this 2-step production process a capillary closed at one end having a thin wall with a homogeneous thickness distribution can be obtained that are of importance in the field of rtPCR (no wall displacement, no deformation during temperature cycles, no embedded air bubbles).

Moreover, the 2-step production process enables a easy degassing of the mold during the two injection steps, such that the formation of air bubbles in the plastic material can be avoided

The 2-step production process according to the present invention provides not only the possibility to produce long capillaries with thin walls, but also to produce them with high accuracy, said accuracy is sufficient to apply them to highly sensitive rtPCR applications. For rtPCR applications it is of utmost importance that the capillaries do not deform during the temperature cycles, that the heat transfer through the capillary walls is homogeneous and that no air bubbles are embedded in the capillary walls.

The requirement towards temperature deformation is even higher for capillaries that should be used in rtPCR maschine applying a rotary motion of the capillaries in order to place them into the detection position (e.g. the LightCycler® devices of Roche Diagnostics GmbH). Here, in addition to the thermal stress a centrifugal force need to be balanced. If such a deformation of the capillaries can not be avoided, the position with respect to the detection optic will differ between different capillaries and the comparability of said capillaries is no longer warranted.

### Detailed Description of the Invention

One aspect of the present invention is a reaction container for real-time nucleic acid amplifications made of plastic material comprising
a) a capillary section closed at one end,
b) a tubular section open at both ends, and
c) a linkage between said capillary section and said tubular section,
wherein said linkage is a fused joint designed to permanently link the open end of said capillary section to one of said open ends of said tubular section thus forming a reaction container having one opening, said fused joint is producing light scatter upon illumination.The reaction containers according to the present invention are assembled from two sections via a linkage, wherein said linkage between the two sections is established by heat, said heat is sufficient to melt said sections at the interface and the linkage forms during subsequent cooling of said interface. Said linkage forming during subsequent cooling of the interface is called fused joint throughout the present invention.

Assembling a reaction container out of a capillary section, a tubular section and a fused joint as a linkage between both section has the advantage that the production of said reaction container can be divided into sub-steps. This offers the opportunity to produce reaction containers having certain geometrical dimensions and/or a certain quality that are not available by a 1-step production, because for each section as part of the final reaction container the required dimensions and/or quality are easier to fulfill. In other words, the fused joint as linkage between two sections of a reaction container offers the possibility to e.g. enhance the quality, reduce the wall thickness and/or to increase the container length.

In a preferred reaction container according to the present invention, said linkage, said capillary section and said tubular section are made of the same plastic material.

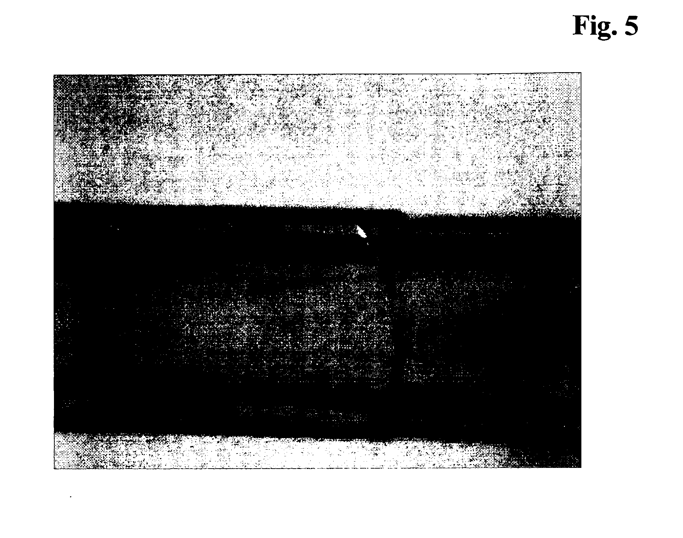

It is preferred that both sections and the linkage are made from the same material, such that the optical properties of the entire reaction container is as homogeneous as possible. Nevertheless, even with the same material, there will be a certain area with different optical properties at the interface between the sections (see the photograph of Figure 5), said difference in optical properties at the interface is based on a different morphological structure of the linkage material.

As mentioned before, the linkage throughout the present invention is formed by heat in order to locally melt the interface between the two sections. As the person skilled in the art will appreciate, the molecular structure of plastic is highly depending from the production procedures. Throughout the present invention the phrase molecular structure is used as a term to describe the arrangement of the molecules to form a three-dimensional structure (in other words, the morphological or physical structure of the material) and therefore, a material having an identical molecular composition can still form different molecular structures. Consequently, the plastic of the linkage will differ from the rest of the reaction container in terms of its molecular arrangement, because the temporary, local melting of the interface to produce a fused joint will result in a different morphological structure as compared to e.g. the structure based on controlled cooling from a homogeneous mold.

In a preferred setup of the reaction container according to the present invention, the capillary section as well as the tubular section are injection moulded items. To produce the fused joint as linkage, the molten plastic necessary to form said capillary section in the second production step is allowed to contact the pre-formed tubular section, thereby temporarily melting the boarder of the tubular section and creating a fused joint between both sections during cooling of the mold.

In another preferred reaction container according to the present invention, the material of said linkage has a different molecular structure than both the material of said capillary section and said tubular section.Such changes within the molecular structure of the plastic material constitute an optical interface that will produce light scatter. Therefore, it is preferred that said linkage of the reaction container is provided at a position with minimal effect on the real-time detection of the nucleic acid amplification.

The photograph of a reaction container according to the present invention in Figure 5 (taken with a standard digital camera) shows the light scattering along the fused joint of the container and consequently, it is an intrinsic property of the fused joint permanently linking the capillary section with the tubular section to produce light scatter upon illumination.

In yet another preferred reaction container according to the present invention, said capillary section and said tubular section are injection moulded items.

Injection moulded items for the capillary section and the tubular section are preferred mainly because the formation of the linkage between the two section is a direct consequence of the production process. If the two sections of the reaction container are produced successively and the second section is molded directly in contact with the first section, the molten plastic of the second section will locally melt the plastic of the first section and form the linkage upon cooling.

In a more preferred reaction container according to the present invention, said capillary section has a wall thickness of 0.2 - 0.4 mm.

In another more preferred reaction container according to the present invention, said capillary section has an inner diameter of 0.7 - 2 mm.

Mainly, there are two geometrical parameters that need to be optimized in order to obtain a reaction container that is suitable for real-time nucleic acid amplifications, namely the wall thickness and the surface-to-volume ratio. Nucleic acid amplifications require precise temperature profiles within the target solution and consequently, it is essential to transfer heat fast in both directions through the walls of the reaction container. Therefore, it is obvious that the wall thickness is of importance for the design of said reaction container.

Moreover, the heat transfer is proportional to the surface of the interface and the time for heat equilibration within the reaction container increases proportional with the reaction volume. Therefore, the person skilled in the art will appreciate that the reaction container should have a large surface-to-volume ratio. With respect to reaction containers for PCR, the ideal geometry are long and thin capillaries.

In yet another preferred reaction container according to the present invention, said tubular section has the same wall thickness and the same inner diameter than said capillary section at the opening permanently linked to the open end of said capillary section.

Even though the reaction container according to the present invention comprises two section permanently linked together, it is essential that the reaction container is as homogeneous as possible. Therefore, it is preferred that the wall thickness of both section is adjusted, such that the reaction container does not exhibit steps, at least within the reaction section, where such steps would generate additional light scatter.

Throughout the present invention the reaction section is defined as the part of the reaction container that will be filled with reagent for the intended use of the reaction container. Moreover, throughout the present invention the geometry of this reaction section is relevant for the performance of the reaction container and consequently, the surface-to-volume (SN) ration is calculated for this part of the container.

The surface-to-volume ration of a reaction container in form of a capillary is only depending upon the inner and outer radius (rᵢₙ and rₒᵤₜ) of the container and is independent from its length 1 (SN = 2πrₒᵤₜ1 / πrᵢₙ²1 = 2rₒᵤₜ/ rᵢₙ² ; neglecting the small surface of the capillary bottom). Therefore, if the volume of a capillary should be increased without affecting the SN ratio, the length of the capillary must be increased without changing its radius.

In still another preferred reaction container according to the present invention, said tubular section has portions with different diameters.

In another preferred reaction container according to the present invention, said capillary section has portions with different diameters.

In yet another preferred reaction container according to the present invention, the diameter of said tubular section at the opening not linked to said capillary section is larger than the diameter at the opening permanently linked to said capillary section.

In still another preferred reaction container according to the present invention, the diameter of said capillary section at the opening linked to said tubular section is larger than the diameter towards the closed end of said capillary section.

To provide the reaction container with a large opening and a decreasing diameter towards its closed end has several advantages. First of all, this geometry simplifies the loading of the reaction container with reagents. Moreover, in case of using molding techniques for the production of the reaction container, this geometry enables an easy removal of the container from the core of the mold.

In another preferred reaction container according to the present invention, the inner diameter of said tubular section at the opening not linked to capillary section is 2 - 10 mm.

Said inner diameter at the opening of the reaction container needs to be adjusted to the intended application. E.g., if said reaction containers are designed as vessels for automated real-time PCR amplifications, this inner diameter nedds to be adjusted to the holding device of the PCR machine intended to be used.

In yet another preferred reaction container according to the present invention, said opening of said tubular section not linked to said capillary section is designed such that an air-tight seal with a closure means is obtainable.

Throughout the present invention it is preferred that the reaction container has a reaction section constituting only a part of the entire reaction container. Said reaction section is placed at the closed end of the reaction container and it is preferred that said reaction section is composed of the entire capillary section and, if necessary a part of the tubular section. Depending on the design of the capillary, the linkage between the capillary section and the tubular section may be part of the reaction section.

As mentioned before, the linkage of the reaction container has a different molecular structure than the capillary as well as the tubular section of the container and consequently, said linkage will produce a certain amount of light scatter. Based on this reasoning, it would be preferred to design the reaction container such that the linkage is not within the reaction section. But, as will be discussed later with respect to the method according to the present invention, the quality of the capillary section is depending to some extend on its length, too. To summarize, it may be preferred to design the reaction container with short capillary section, even though the linkage is then within the reaction section.

In yet another preferred reaction container according to the present invention, said tubular section has portions with different wall thickness.

In contrast to the wall thickness of the capillary section, there is no need to minimize the wall thickness of the tubular section over its entire extent, because only at least a part of the tubular section is also part of the reaction section and only the wall thickness of the reaction section affects the container performance.

Consequently, the wall thickness of the tubular section not part of the reaction section can be enlarged in oder to provide stability to the reaction container, to provide an opening suitable to enable an air-tight seal or to provide a secure fixation within an analysis device.

Similar to the above mentioned discussion with respect to wall thickness, the requirements of the reaction container concerning length and volume can be separated in requirements critical or not critical for the container performance. The length and volume of the reaction section is essential for the performance of the reaction container, because these parameters define the surface-to-volume ration. On the other hand, the overall volume and length of the entire reaction container does not influence the performance, but are of relevance for aspects such as stability, suitability for a certain analyzer or filling with reagents.

In still another preferred reaction container according to the present invention, said reaction container has a length of 30 - 55 mm.

In yet another preferred reaction container according to the present invention, said reaction container has at its closed end a reaction section with constant wall thickness, said reaction section has a volume of 10 - 30 µl.

In a more preferred reaction container according to the present invention, said reaction section has a length of 10 - 30 mm.

As mentioned before, the length of the reaction section is the preferred geometric parameter of the reaction container in order to define the container volume without affecting the S/V ratio.

In another preferred embodiment of the reaction container according to the present invention at least the reaction section is not cylindrical. But even in this embodiment it is preferred that the wall thickness is constant for the entire reaction section.

In a preferred reaction container according to the present invention, said reaction section is a conical reaction section.

In a more preferred reaction container according to the present, said conical reaction section has a conical angle of 0.5° - 2°.

As mentioned before with respect to the reaction container, the conical form of the reaction section is especially preferred, if the container is produced using molding techniques, because this special form enhances the removal of the container from the core of the mold.

In another preferred reaction container according to the present invention, said reaction section has a surface-to-volume ratio of 1 - 15 mm⁻¹.

In yet another preferred reaction container according to the present invention, said plastic material is cyclo-olefin copolymer (COC), cyclo-olefin polymer (COP) or polycarbonate (PC).

In general, the plastic materials suitable for the reaction containers according to the present invention must combine a very high level of light transmission with a good thermal stability under the thermal conditions of PCR cycling.

With respect to the preferred materials mentioned above, COC and COP provide a very good stability. In addition, COC shows a low level of self-fluorescence, whereas said self-fluorescence is of course a critical parameter for rtPCR based on fluorescence detection. Certain COP materials need nitrogen as cover gas during processing to avoid discoloring of the material. PC has a cheap material price and therefore, it is economically advantageous. COP has very good technical properties, but is rather high priced.

Suitable materials are e.g. the COC material Topas 5013S, the PC material Makrolon CD 2005 or the COP material Zeonex 690R.

Another aspect of the present invention is an injection molding method to produce a reaction container according to the present invention, said method comprises
a) providing a first mold with a core,
b) performing a first injection step to produce the tubular section of said reaction container, said tubular section is partially surrounding said core,
c) placing said core partially surrounded by said tubular section in a second mold, and
d) performing a second injection step to produce the capillary section of said reaction container,
wherein said capillary section becomes permanently linked to said tubular section during said second injection step to form said reaction container having one opening.

During the first injection step, the flow direction of the molten plastic is preferably parallel to the core. This flow direction pushes air within the molt parallel to the core towards deaeration spots and avoids the enclosure of air bubbles.

In a preferred method according to the present invention, said core is fixed at both ends during said first injection step b).

In this preferred embodiment of the method according to the present invention said core is arranged such that both parts of the core are fixed in order to ensure a stable positioning of the core within the flow field of the molten mass. This fixation of the core enables an increase of the produceable reaction container length.

In a more preferred method according to the present invention, said core is suspended at its first end and the second end of said core form-fits into a recess of said first mold, such that a tubular section with two open ends forms around said core.

It is preferred that the molten plastic flows along the core starting at the suspended part forming the opening of the reaction container in the direction of the fixed part of the core forming the capillary section of the reaction container. Consequently, the degassing occurs at the interface between the core and the recess fixation of said core.

In yet another preferred method according to the present invention, said first injection step is performed using at least two injection ports.

Due to the use of two injection ports for the first injection step, an additional increase in length of the capillary can be reached. This is based on two different flow fields of the molten mass generated by two injection ports and the at least partial balancing of their shear forces. This is in contrast to state of the art injection techniques based on only one injection port, where the balancing of negative shear forces can only be attempted by molt temperature and injection pressure.

It is preferred that the mass flow through both injection ports are equal such that tensions within the reaction container are minimized and a homogeneous flow field parallel to the core is provided.

For the subsequent process step, the core of the first injection step still surrounded by the tubular section is used as the core for the mold of the second injection step.

In a more preferred method according to the present invention, in step d) said second end of said core, sticking out from the tubular section formed in step b) is placed within said second mold to form the capillary section during said second injection step, said capillary section is linked to said tubular section due to local melting of said tubular section.

During the second injection step, the flow direction of the molten plastic is preferably perpendicular to the core and the degassing occurs again at the interface between the core and the tubular section produced during the first injection step. This degassing procedure pushes air around the core and based on an optimized flow profile it is possible to avoid degassing in the optically sensitve region of the capillary section.

In still another preferred method according to the present invention, said second injection step is performed using one injection port.

For the second injection step producing the capillary section of the reaction container it is suitable to perform the molding with only one injection port due to several aspects.

For the production of the capillary section it is not longer possible to fix both sides of the core as for the first injection step. Therefore, it is preferred to design the reaction container with a small capillary section, because for a long capillary section the free tip of the core is susceptible to deformation in the flow field risking the production of inhomogeneous containers.

Because at least compared to the tubular section the capillary section is small requiring only a small amount of molten plastic, the requirements for this injection step can be fulfilled even with one injection port.

Moreover, the entire capillary section is within the reaction section and therefore, the homogeneity is essential for the optical properties of the container. Therefore, it is preferred to have only one injection port, because each injection port will generate an area with inhomogenities within the final product. This statement holds true also for the degassing ports and therefore, it is preferred to arrange the degassing at the interface between capillary and tubular section, said interface provides the linkage of the container with unavoidable inhomogenities.

In a preferred method according to the present invention, molten plastic having a temperature of 240 - 290 °C is used for said first injection step.

With respect to the injection temperature, two aspects need to be considered. On one hand, high temperatures reduce the viscosity of the molten plastic and facilitate the filling, but on the other hand, at higher temperatures the material may become yellow, whitch infuences the light transmission. Hence, the temperature of the molten plastic before injection should not exeed 290°C. Moreover, overheated material may become brittle.

In another preferred method according to the present invention, molten plastic is injected with a pressure of 600 - 1000 bar for said first injection step.

Throughout the present invention, a high injection pressure is preferred in order to fill the cavity rapidly, such that the deflection of said core can be minimized.

In a more preferred method according to the present invention, the pressure for said first injection is 800 bar.

In yet another preferred method according to the present invention, molten plastic having a temperature of 240 - 290 °C is used for said second injection step.

In still another preferred method according to the present invention, molten plastic is injected with a pressure of 200 - 400 bar for said second injection step.

In a more preferred method according to the present invention, the pressure for said first injection is 300 bar.

The following examples and figures are provided to aid the understanding of the present invention, the true scope of which is set forth in the appended claims. It is understood that modifications can be made in the procedures set forth without departing from the spirit of the invention.

### Description of the Figures

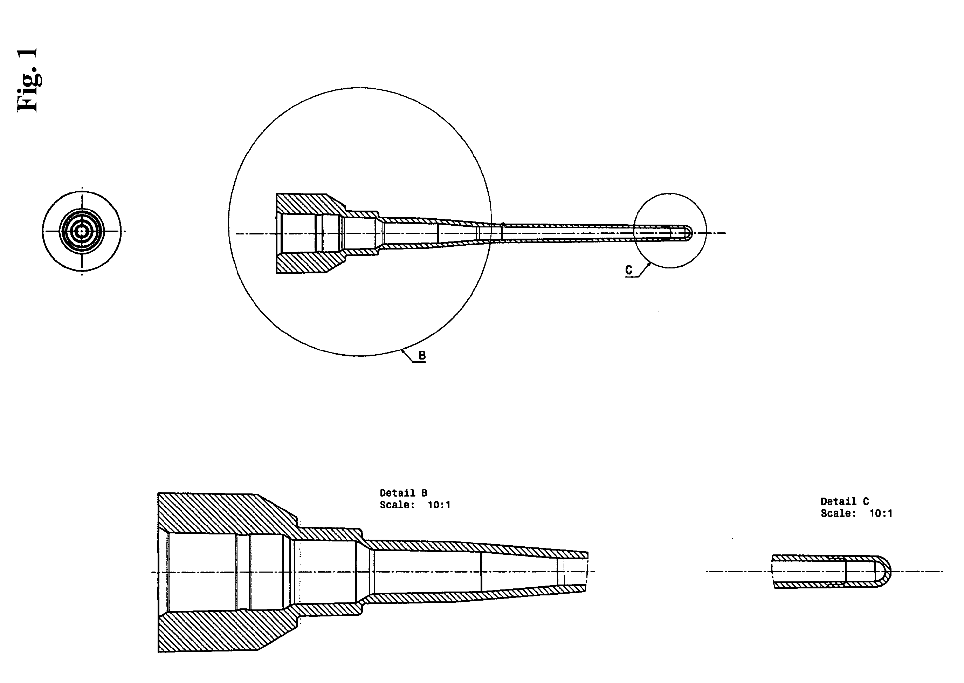

- **Figure 1**: Schematic drawing illustrating one embodiment of the 2-step plastic capillary.

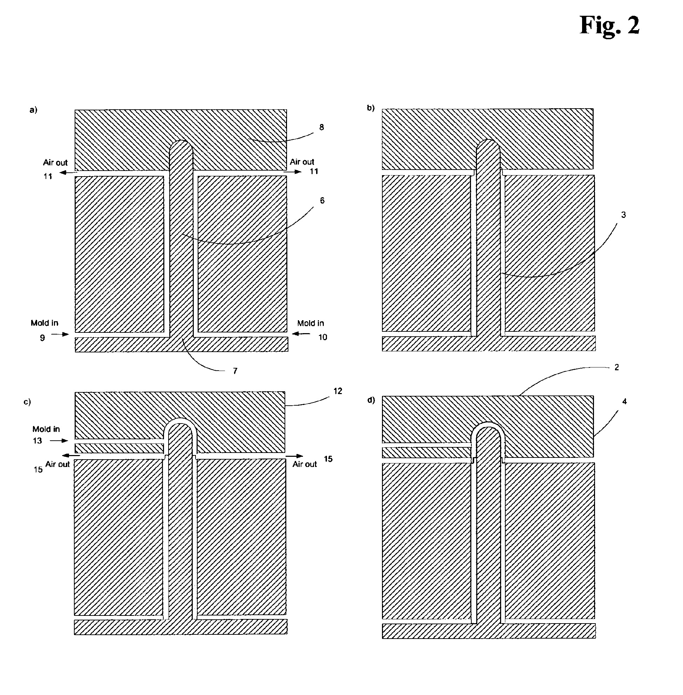

- **Figure 2**: Cross sectional view illustrating the production method of the 2-step plastic capillaries.

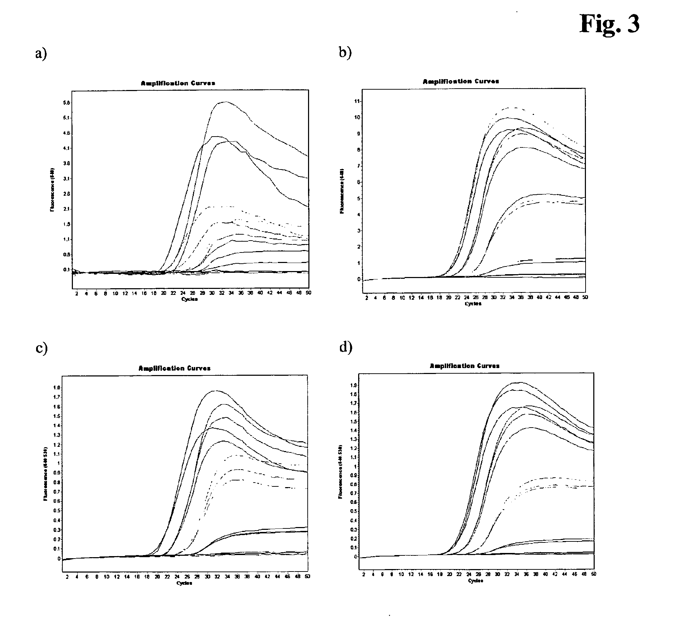

- **Figure 3**: rtPCR curves for HybProbe CycA amplification (a: 640 nm plastic; b: 640 nm glass; c: 640/530 nm plastic; d: 640/530 nm glass).

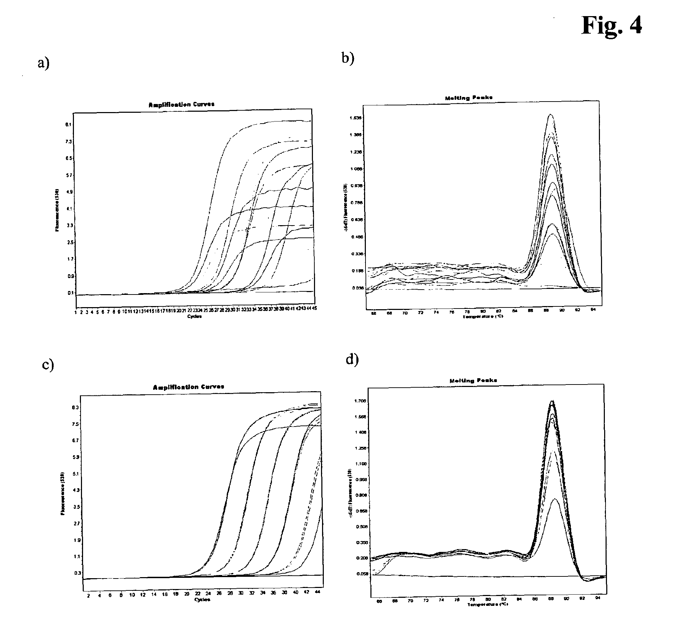

- **Figure 4**: rtPCR curves and melting curves for SYBR Green I PBGD amplification (a: plastic rtPCR; b: plastic TM ; c: glass rtPCR; d: glass TM).
- **Figure 5**: Photograph of a capillary part comprising the linkage between the capillary section and the tubular section.

The plastic capillaries according to the present invention that were used for the following examples have the following characteristics:
wall thickness of the capillary section: 0.3 mm
inner diameter of the capillary section: 1.09 mm
reaction container length: 42 mm
inner diameter tubular section at opening not linked to capillary section: 3.98 mm
reaction section volume: 20 µl
reaction section length: 19.26 mm
conical angle of conical reaction section: 1°

### Example 1: CycA with HybProbe-Format

In this experiment plastic capillaries (20 µl) according to the present invention are compared with glass capillaries (20 µl, Id.Nr. 11 909 339 001, Lot 3529565-00, Roche) for a rtPCR amplification of CycA using the HybProbe format for RNA using a LightCycler (Roche, Software-Version: LCS4 4.0.5.415). The plastic capillaries were produced using COC Topas5013.

The PCR was performed according to the following procedure:
- **Kit:**: LightCycler RNA Amplification Kit HybProbe, IdNr. 12 015 145 001, Lot 13419720
- **Primer/Probe:**: forward primer CycA: SEQ ID NO: I
reverse primer CycA: SEQ ID NO:2
3' Fluorescein probe CycA: GGC CAT GGA GCG CTT TGG GT -Fluorescein (SEQ ID NO:3)
5' Red 640 probe CycA: Red 640- AAT GGC AAG ACC AGC AAG AAG ATC AC (SEQ ID NO:4)
- **Template:**: Universal Human Reference RNA (Stratagene Cat.No. 740000-41, Lot 1139623 with concentrations 20, 2 ng/µl, 200, 20, 2 pg/µl)

| **Mastermix:** | | 20 x |
|---|---|---|
| | H₂O | 184 |
| | LC RT-PCR Reaction Mix, 5x | 80 |
| | MgCl₂ [25 mM] | 48 |
| | CycA Primer-Probe-Mix [10x] | 40 |
| | LC RT-PCR Enzym Mix, 50x | 8 |
| | total | 360 µl |

| **Run protocol:** 18 µl mastermix per capillary plus 2 µl RNA (threefold) | | | | | | |
|---|---|---|---|---|---|---|
| | **Cycles** | **Analysis** | **Temp.** | **Time** | **Rate** | **Acqui sition** |
| **RT** | 1x | | 50°C | 10 min | 20 °C/s | - |
| **Denatu ration** | 1x | | 95°C | 1 min | 20 °C/s for glass cap. 1 °C/s for plastic cap. | - |
| **Amplifi cation** | 50x | Quantificat. | 95°C | 0 s | 20 °C/s for glass cap. 1 °C/s for plastic cap. | - |
| | | | 55°C | 10 s | 20 °C/s | single |
| | | | 72°C | 18 s | 3 °C/s | - |
| **Cooling** | 1x | | 40°C | 30 s | 20 °C/s | - |

| **Analysis performed at 640 nm:** | | | | |
|---|---|---|---|---|
| | **Plastic capillary** | | **Glass capillary** | |
| **Template** | **Cp** | **STABW** | **Cp** | **STABW** |
| **20 ng RNA** | 19.36 | 0.46 | 20.43 | 0.26 |
| **2 ng RNA** | 22.13 | 0.16 | 22.74 | 0.04 |
| **200 pg RNA** | 24.72 | 0.08 | 24.66 | 0.10 |
| **20 pg RNA** | 25.77 | 0.21 | 25.36 | 0.19 |
| **2 pg RNA** | | | | |
| **NTC** | | | | |

| **Analysis performed at 640/530 nm :** | | | | |
|---|---|---|---|---|
| | **Plastic capillary** | | **Glass capillary** | |
| **Template** | **Cp** | **STABW** | **Cp** | **STABW** |
| **20 ng RNA** | 19.78 | 0.22 | 20.90 | 0.21 |
| **2 ng RNA** | 22.39 | 0.22 | 23.09 | 0.03 |
| **200 pg RNA** | 24.89 | 0.06 | 24.80 | 0.11 |
| **20 pg RNA** | 25.88 | 0.08 | 25.42 | 0.19 |
| **2 pg RNA** | 26.13 | | | |
| **NTC** | | | | |

### Summary:

The Cp values and the standard deviation are similar for the plastic as well as for the glass capillaries. For the analysis at 640/530 nm the PCR curves for the plastic capillary look similar as compared to the glass capillaries and the standard deviation are even lower.

### Example 2: PBGD with SYBR Green I format

In this experiment plastic capillaries (20 µl) according to the present invention are compared with glass capillaries (20 µl, Id.Nr. 11 909 339 001, Lot 3529565-00, Roche) for a rtPCR amplification of PBGD using the SYBR Green I format for DNA using a LightCycler (Roche, Software-Version: LCS4 4.0.5.415). The plastic capillaries were produced using COC Topas5013.

The PCR was performed according to the following procedure:
- **Kit:**: LightCycler - FastStart DNA Master^{PLUS} SYBR Green I, IdNr. 03 515 885 001, Lot 13828500
- **Primer:**: according to the 'LightCycler h-PBGD Housekeeping Gene Set' (Cat.No. 03 146 073 001, Roche)
- **Template:**: cDNA synthesis was performed using the '1st strand cDNA Synthesis Kit for RT-PCR' (Cat.No. 11 483 188 001, Roche)

| **Mastermix:** | | 20 x |
|---|---|---|
| | H₂O | 240 |
| | PBGD for/rev [each 5 µM] | 40 |
| | SGI Master, 5x | 80 |
| | total | 360 µl |

| **Run protocol:** 18 µl mastermix per capillary plus 2 µl RNA (threefold) | | | | | | |
|---|---|---|---|---|---|---|
| | **Cycles** | **Analysis** | **Temp.** | **Time** | **Rate** | **Acquisition** |
| **Denaturation** | 1x | | 95°C | 10 min | 20 °C/s for glass cap. 1 °C/s for plastic cap. | - |
| **Amplification** | 45x | Quantificat. | 95°C | 10 s | 20 °C/s for glass cap. 1 °C/s for plastic cap. | - |
| | | | 58°C | 10 s | 20 °C/s | - |
| | | | 72°C | 15 s | 20 °C/s | single |
| **Melting** | 1 x | Melting C. | 95°C | 0 s | 20 °C/s | - |
| | | | 42°C | 15 s | 20 °C/s | - |
| | | | 80°C | 0 s | 0.1 °C/s | cont. |
| **Cooling** | 1x | | 40°C | 30 s | 20 °C/s | - |

| **Analysis Cp values:** | | | | |
|---|---|---|---|---|
| | **lange Plastikkapillare** | | **Glaskapillare** | |
| **Template** | **Cp** | **STABW** | **Cp** | **STABW** |
| **cDNA 1 - 5*10⁵c** | 21.56 | 0.29 | 23.28 | 0.30 |
| **cDNA 2** - **5*10⁴c** | 25.38 | 0.07 | 27.18 | 0.10 |
| **cDNA 3 - 5*10³c** | 28.93 | 0.08 | 31.04 | 0.11 |
| **cDNA 4 - 500c** | 32.73 | 0.11 | 34.97 | 0.04 |
| **cDNA 5** - **50c** | 35.82 | 0.16 | 40.00 | 0.00 |
| **cDNA 6** - **NTC** | 0.00 | 0.00 | 0.00 | 0.00 |

| **Analysis melting curve:** | | |
|---|---|---|
| | **Plastic capillary** | **Glass capillary** |
| **MW** | 89.17 | 88.62 |
| **STABW** | 0.19 | 0.11 |

### Summary:

SYBR Green I as detection format works very good using the plastic capillary according to the present invention. The PCR curves are well formed and the Cp values of the plastic capillaries are even lower compared to the glass capillaries. The standard deviation of both capillaries are comparable. The melting curves are similar having good standard deviations.

## Claims

1. A reaction container for real-time nucleic acid amplifications made of plastic material comprising
a) a capillary section closed at one end,
b) a tubular section open at both ends, and
c) a linkage between said capillary section and said tubular section,
wherein said linkage is a fused joint designed to permanently link the open end of said capillary section to one of said open ends of said tubular section thus forming a reaction container having one opening, said fused joint is producing light scatter upon illumination.

2. The reaction container according to claim 1, wherein said linkage, said capillary section and said tubular section are made of the same plastic material.

3. The reaction container according to claim 2, wherein the material of said linkage has a different molecular structure than both the material of said capillary section and said tubular section.

4. The reaction container according to claims 1-3, wherein said capillary section has a wall thickness of 0.2 - 0.4 mm.

5. The reaction container according to claims 1-4, wherein said capillary section has an inner diameter of 0.7 - 2 mm.

6. The reaction container according to claims 1-5, wherein the opening of said tubular section not linked to said capillary section is designed such that an air-tight seal with a closure means is obtainable.

7. The reaction container according to claims 1-6, wherein said reaction container has at its closed end a reaction section with constant wall thickness, said reaction section has a volume of 10 - 30 µl.

8. The reaction container according to claim 7, wherein said reaction section has a length of 10 - 30 mm.

9. The reaction container according to claims 7-8, wherein said reaction section is a conical reaction section.

10. The reaction container according to claims 1-9, wherein said reaction section has a surface-to-volume ratio of 1 - 15 mm⁻¹.

11. The reaction container according to claims 1-10, wherein said plastic material is cyclo-olefin copolymer (COC), cyclo-olefin polymer (COP) or polycarbonate (PC).

12. An injection molding method to produce a reaction container according to claim 1-11, said method comprises
a) providing a first mold with a core,
b) performing a first injection step to produce the tubular section of said reaction container, said tubular section is partially surrounding said core,
c) placing said core partially surrounded by said tubular section in a second mold, and
d) performing a second injection step to produce the capillary section of said reaction container,
wherein said capillary section becomes permanently linked to said tubular section during said second injection step to form said reaction container having one opening.

13. The method according to claim 12, wherein said core is suspended at its first end and wherein the second end of said core form-fits into a recess of said first mold, such that a tubular section with two open ends forms around said core.

14. The method according to claim 13, wherein in step d) said second end of said core, sticking out from the tubular section formed in step b) is placed within said second mold to form the capillary section during said second injection step, said capillary section is linked to said tubular section due to local melting of said tubular section.

15. The method according to claims 12-14, wherein said first injection step is performed using at least two injection ports.
